# EUROPÄISCHE PATENTSCHRIFT

(11) **EP 2 432 748 B1**
(45) Veröffentlichungstag und Bekanntmachung des Hinweises auf die Patenterteilung: **08.05.2013**
(21) Anmeldenummer: 10720581.7
(22) Anmeldetag: 10.05.2010
(51) Int. Cl.: C04B 26/02, C04B 26/04, C04B 26/06, C04B 26/08, C04B 28/02

(54) **FASERHALTIGE PASTÖSE BAUSTOFFMASSEN**
FIBER-CONTAINING PASTY CONSTRUCTION MATERIALS
MATÉRIAUX DE CONSTRUCTION SOUS FORME DE PÂTES FIBREUSES

(30) Priorität: 18.05.2009 DE 102009003196
(43) Veröffentlichungstag der Anmeldung: 28.03.2012
(73) Patentinhaber: Wacker Chemie AG, 81737 München (DE)
(72) Erfinder: INGRISCH, Stefan, 83376 Truchtlaching (DE); BASTELBERGER, Thomas, 84547 Emmerting (DE); BEZLER, Jürgen, 84489 Burghausen (DE); MÜHLTHALER, Jakob, 84375 Kirchdorf (DE)
(74) Vertreter: Ege, Markus
(86) Internationale Anmeldenummer: PCT/EP2010/056357
(87) Internationale Veröffentlichungsnummer: WO 2010/133468

(56) Entgegenhaltungen:
- EP-A1- 0 230 220
- WO-A2-01/77242
- DE-A1- 4 324 315
- DE-A1- 19 624 149
- DE-A1- 19 839 295
- DE-A1-102004 048 584

## Beschreibung

Die Erfindung betrifft faserhaltige pastöse Baustoffmassen und deren Verwendung beispielsweise zum Aufbau von Armierungsgewebe-freien Wärmedämmverbundsystemen.

Zum Aufbau von Wärmedämmverbundsystemen (WDVS) werden üblicherweise Dämmplatten, beispielsweise Hartschaumplatten oder Steinwollplatten, mit Klebemörtel am Mauerwerk befestigt, anschließend wird auf die Dämmplatten eine Armierungsschicht aufgetragen, in welche Armierungsgewebe, meist Glasfasergewebe, eingelegt werden, und schließlich wird das Verbundsystem mit einem Oberputz abgedeckt. So wird in der DE-A 2516916 oder in der DE-A 4216204 die Herstellung von Armierungsschichten beschrieben, indem zuerst Polymer-modifizierte Baustoffmassen, die 8 bis 17 Gew.-% hydraulisch abbindende Bindemittel enthalten, auf Dämmplatten aufgebracht werden und anschließend Fasergewebe, wie beispielsweise Glasseidengewebe oder Glasfasergitter, eingebettet werden. Armierungsgewebefreie Beschichtungen werden nicht beschrieben. In der DE-A 4216204 wird zur Wärmedämmung von Gebäuden empfohlen, diese mit mineralischen Dämmplatten sowie einer 15 bis 28 Gew.-% an hydraulisch abbindenden Bindemitteln enthaltenden zementären Putzschicht zu versehen, wobei zwischen die Wärmedämmplatten und die Putzschicht ein Fasergewebe eingebettet wird. Die Putzschicht kann dabei noch Fasermaterialien oder Polymere als Haftverbesserungsmittel enthalten.

Das Aufbringen von Fasergewebe-bewährten Armierungsschichten auf Wärmedämmplatten erfordert also prinzipiell mehrere Arbeitsgänge. In einem Schritt wird die Armierungsmasse auf die Wärmedämmplatte aufgebracht, in einem weiteren Schritt das Armierungsgewebe in die Armierungsmasse eingebettet und anschließend die Armierungsmasse glatt gestrichen. Das Einbringen des Armierungsgewebes in die aufgebrachte Armierungsmasse stellt einen Schritt dar, der zusätzlich nicht nur Arbeitszeit, sondern auch Material (Armierungsgewebe) kostet. Einfacher zu verarbeiten und weniger arbeitsaufwändig wäre es, wenn eine Armierungsgewebe-freie Armierungsschicht nach Aushärtung die gleichen Eigenschaften hätte wie eine herkömmliche Armierungsschicht bestehend aus Armierungsmasse und zusätzlich eingearbeitetem Armierungsgewebe.

Einige Ansätze zur Herstellung Armierungsgewebe-freier Wärmedämmverbundsysteme sind schon bekannt. So beschreibt die DE-A 10248098 Wärmedämmverbundsysteme umfassend Dämmplatten und eine Glasfaserarmierte, zementäre Putzschicht. Die DE-A 2622465 beschreibt Fasern enthaltende zementäre Putze. Die faserhaltigen Putze der DE-A 10248098 und der DE-A 2622465 sind nicht mit Polymerisaten auf Basis ethylenisch ungesättigter Monomere modifiziert. Auch die Putze der DE-A 19624149 enthalten keine Polymerisate auf Basis ethylenisch ungesättigter Monomere. In der DE-A 3429251 werden zur Beschichtung von Wärmedämmschichten Kunstharzbeschichtungsmittel eingesetzt, die vernetzte oder vernetzbare Polymerisate mit Glasübergangstemperaturen Tg von tiefer als -15°C enthalten sowie gegebenenfalls zusätzlich Fasern. Die Verwendung von vorvernetzten oder vernetzbaren Polymeren führt zu spröden Putzen mit der Gefahr der Rissbildung. In der DE-A 102004048584 werden Außenputzzubereitungen enthaltend Kohlenstofffasern und Bindemittel zur Herstellung von mit Fasergewebe armierten Wämerdämmverbundsystemen empfohlen. Die DE-A 19839295 betrifft Wärmedämmverbundsysteme aus mineralischen Leichtdämmplatten, die mit einem hydraulischen Leichtputz beschichtet und längs der Fugen mit dem Leichtputz verklebt sind. Der hydraulische Leichtputz enthält 10 bis 30 Gew.-%, bezogen auf die Trockenmasse, hydraulisch abbindende Bindemittel, Polymerdispersionen und Baumwollfasern. Die DE-A 4032769 empfiehlt für Wärmedämmverbundsysteme Beschichtungsmittel mit Bindenmitteln auf Basis von Kunststoffdispersionen oder anorganischen Bindemitteln. Aus der DE-A 3040077 ist ein Verputztrockenmörtel zur Beschichtung von Dämmplatten bekannt, wobei der Verputztrockenmörtel Glasfasern, polymere Bindemittel sowie mindestens 10 Gew.-%, bezogen auf die Trockenmasse, hydraulisch abbindende Bindemittel enthalten. Die DE-A 2703342 beschreibt Mörtel enthaltend Polymerisate, Fasern und 15 bis 40 Gew.-%, bezogen auf die Trockenmasse, hydraulisch abbindende Bindemittel zur Beschichtung von Wärmedämmplatten. In der DE-A 19950441 werden Faser-modifierte Wandputze beschrieben, die als Bindemittel Copolymerisate auf Basis von Acrylsäureestern und Styrol sowie Ethylhydroxyethylcellulose enthalten. Die DE-A 102008043988 empfiehlt zur Herstellung von Wärmedämmverbundsystemen faserhaltige, Polymer-modifizierter Trockenmortelformulierungen, die zusätzlich 10 bis 30 Gew.-% hydraulisch abbindende Bindemittel enthalten.

Des Weiteren werden in der DE-A 19624149 Faser-modifizierte Putze für Dekorzwecke beschrieben. Die DE-A 19903756 empfiehlt Dekorputze enthaltend als Bindemittel organische Polymere sowie Füllstoffe und als weitere Komponente Kunststoffflocken.

Trotz der vielfachen Ansätze zur Herstellung faserhaltiger Armierungsschichten besteht ein Bedarf an Baustoffmassen, in denen die Fasern mit den weiteren Komponenten der Armierungsschichten besser verträglich sind und stärker wechselwirken und zusammenhängend damit zu Wärmedämmverbundsystemen mit verbesserten mechanischen Eigenschaften und geringerer Neigung zur Rissbildung führen.

Die DE 43 24 315 A1, die sich ebenfalls mit der Reduzierung der Rissbildungsneigung von faserhaltigen, polymervergüteten Massen beschäftigt, offenbart eine faserhaltige Masse enthaltend Füllstoffe, Fasern, weitere Zusatzmittel sowie ein Polymerisat auf Basis von Vinylacetat. Als weitere geeignete Polymerisate nennt die DE 43 24 315 A1 Acrylatpolymere, ABS-Harze oder Polyurethane.

Vor diesem Hintergrund bestand die Aufgabe, faserhaltige pastöse Baustoffmassen bereitzustellen, mit denen die vorgenannten Nachteile überwunden werden können.

Gegenstand der Erfindung sind faserhaltige pastöse Baustoffmassen enthaltend a) ein oder mehrere Füllstoffe, b) gegebenenfalls Zusatzstoffe, dadurch gekennzeichnet, dass c) Fasern, d) ein oder mehrere Polymerisate auf Basis von einem oder mehreren ethylenisch ungesättigten Monomeren, mit einer Glasübergangstemperatur Tg von ≥ -15°C, e) ≤ 5 Gew.-% hydraulisch abbindende Bindemittel und f) Wasser enthalten sind, wobei sich die Angabe in Gew.-% auf das Trockengewicht der faserhaltigen pastösen Baustoffmassen bezieht, und wobei die Polymerisate d) ausgewählt werden aus der Gruppe enthaltend Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe der Vinylester mit 1 bis 12 C-Atomen im Carbonsäurerest; Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; Mischpolymerisate mit einem oder mehreren Vinylestern, 1 bis 50 Gew.-% Ethylen und 1 bis 60 Gew.-% Vinylchlorid; wobei sich die Angaben in Gew.-% für das jeweilige Mischpolymerisat auf 100 Gew.-% aufaddieren.

Beispiele für geeignete Füllstoffe a) sind Quarzsand, Quarzmehl, Calciumcarbonat, Dolomit, Aluminiumsilicate, Ton, Kreide, Weißkalkhydrat, Talkum oder Glimmer, oder auch Leichtfüllstoffe wie Bims, Schaumglas, Gasbeton, Perlite, Vermiculite, Carbo-Nano-Tubes (CNT). Es können auch beliebige Gemische der genannten Füllstoffe eingesetzt werden. Bevorzugt werden Quarzsand, Quarzmehl, Calciumcarbonat, Kreide oder Weißkalkhydrat. Im Allgemeinen enthalten die faserhaltigen pastösen Baustoffmassen 30 bis 90 Gew.-%, vorzugsweise 40 bis 80 Gew.-%, Füllstoffe, jeweils bezogen auf das Trockengewicht der faserhaltigen pastösen Baustoffmassen.

Übliche Zusatzstoffe b) für faserhaltige pastöse Baustoffmassen sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole, welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Ein übliches Additiv sind Abbindebeschleuniger, beispielsweise Alkali- oder Erdalkalisalze von anorganischen oder organischen Säuren. Darüberhinaus sind noch zu nennen: Hydrophobierungsmittel, Konservierungsmittel, Filmbildehilfsmittel, Dispergiermittel, Schaumstabilisatoren, Entschäumer und Flammschutzmittel (z.B. Aluminiumhydroxid).

Die Zusatzstoffe b) werden in den dafür üblichen, von der Art des Zusatzstoffes abhängigen, Mengen eingesetzt. Im Allgemeinen liegen die Mengen bei 0,1 bis 10 Gew.-%, jeweils bezogen auf das Trockengewicht der faserhaltigen pastösen Baustoffmassen.

Als Fasern c) eignen beispielsweise sich natürliche oder synthetische Fasermaterialien, sowohl auf Basis von organischen als auch anorganischen Materialien, sowie Gemische daraus. Beispiele für natürliche, organische Fasern sind Baumwolle, Hanf, Jute, Flachs, Holzfasern, Cellulose, Viskose, Lederfasern oder Sisal. Beispiele für synthetische, organische Fasern sind Viskosefasern, Polyamidfasern, Polyesterfasern, Polyacrylnitrilfasern, Dralonfasern, Polyethylenfasern, Polypropylenfasern, Polyvinylalkoholfasern oder Aramidfasern. Die anorganischen Fasern können beispielsweise Glasfasern, Kohlenstofffasern, Mineralwollfasern oder Metallfasern sein. Bevorzugt werden Baumwollfasern, Polyacrylnitrilfasern und Cellulosefasern.

Die eingesetzen Fasern weisen typischerweise eine Länge zwischen 0,1 µm und 16 mm auf, vorzugsweise von 10 µm bis 5 mm. Es können aber auch kürzere oder längere Fasern eingesetzt werden. Besonders bevorzugt werden Fasern in einem Längenbereich von 10 µm bis 1 mm verwendet. Die Fasern können in Form von losen Fasern, bündelweise verklebten Fasern, fibrillierten Fasern, mulitfilamenten Fasern oder Fasern in Dosierverpackung eingesetzt werden. Die Fasern müssen erfindungsgemäß vorteilhafterweise nicht in Form eines Gewebes eingesetzt werden. So umfassen die Fasern vorzugsweise keine Gewebe, Vliese oder flächigen Materialien. Im Allgemeinen enthalten die faserhaltigen pastösen Baustoffmassen 0,1 bis 5 Gew.-%, vorzugsweise 0,5 bis 2 Gew.-% Fasern, jeweils bezogen auf das Trockengewicht der faserhaltigen pastösen Baustoffmassen.

Hydraulisch abbindende Bindemittel e) sind beispielsweise Zemente, insbesondere Portlandzement, Aluminatzement, Trasszement, Hüttenzement, Magnesiazement, Phosphatzement oder Hochofenzement, sowie Mischzemente, Füllzemente, Flugasche, Microsilica, hydraulischer Kalk und Gips. Bevorzugt werden Portlandzement, Aluminatzement und Hüttenzement, sowie Mischzemente, Füllzemente, hydraulischer Kalk und Gips. Im Allgemeinen enthalten die faserhaltigen pastösen Baustoffmassen ≤ 2 Gew.-% und vorzugsweise ≤ 1 Gew.-% hydraulisch abbindende Bindemittel, jeweils bezogen auf das Trockengewicht der faserhaltigen pastösen Baustoffmassen. Am meisten bevorzugt enthalten die faserhaltigen pastösen Baustoffmassen keine hydraulisch abbindenden Bindemittel.

Die faserhaltigen pastösen Baustoffmassen enthalten vorzugsweise 4 bis 26 Gew.-%, besonders bevorzugt 6 bis 20 Gew.-% und am meisten bevorzugt 8 bis 14 Gew.-% Wasser, jeweils bezogen auf die Trockenmasse der faserhaltigen pastösen Baustoffmassen.

Zur Herstellung der Polymerisate d) können ethylenisch ungesättigte Monomere eingesetzt werden aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren. Die Polymerisate sind vorzugsweise nicht vernetzt oder vernetzbar.

Geeignete Vinylester sind solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0,1 bis 5 Gew.-%, bezogen auf das Gesamtgewicht des Monomergemisches, Hilfsmonomere copolymerisiert werden. Bevorzugt werden 0,5 bis 2,5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und - nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Vernetzende Monomere sind auch epoxidfunktionelle Comonomere wie Glycidylmethacrylat und Glycidylacrylat. Weitere Beispiele für vernetzende sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder - methacrylat. Vorzugweise enthalten die Polymerisate d) ≤ 1 Gew.-% Einheiten von vernetzenden Monomeren, bezogen auf die Gesamtmasse der Polymerisate d), und besonders bevorzugt enthalten die Polymerisate d) keine vernetzenden Gruppen.

Die Polymerisate d) haben vorzugsweise Glasübergangstemperaturen Tg von ≥ -13°C, besonders bevorzugt von -10 bis +50°C, ganz besonders bevorzugt von -10 bis +35°C und am meisten bevorzugt von -7 bis +20°C.

Die Monomerauswahl bzw. die Auswahl der Gewichtsanteile der Comonomere erfolgt dabei so, dass die vorgenannten Glasübergangstemperaturen resultieren. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Beispiele für Mischpolymerisate sind Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von einem oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit einem oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden als Polymerisate e) Mischpolymerisate enthaltend von Vinylacetat und 5 bis 50 Gew.-% Ethylen, oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen, oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten, oder Mischpolymerisate mit Vinylacetat, 5 bis 50 Gew.-% Ethylen und 1 bis 60 Gew.-% Vinylchlorid.

Die Herstellung der Polymerisate d) erfolgt im Allgemeinen in wässrigem Medium und bevorzugt nach dem Emulsions- oder Suspensionspolymerisationsverfahren - wie beispielsweise in DE-A 102008043988 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102008043988 beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymerisate d) in Form von wässrigen Dispersionen können wie in der DE-A 102008043988 beschrieben in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Die faserhaltigen pastösen Baustoffmassen enthalten vorzugsweise 2 bis 25 Gew.-%, besonders bevorzugt 4 bis 17 Gew.-% und am meisten bevorzugt 6 bis 10 Gew.-% Polymerisate d), jeweils bezogen auf die Trockenmasse der faserhaltigen pastösen Baustoffmassen.

Die Herstellung der faserhaltigen pastösen Baustoffmassen erfolgt im Allgemeinen so, dass die Komponenten a) bis f) in herkömmlichen Mischvorrichtungen vermischt und homogenisiert werden. Es kann auch so vorgegangen werden, dass einzelne oder alle der Komponenten a) bis e) zunächst getrennt mit Wasser f) zu einer Baustoffmasse angerührt werden. Die Polymerisate d) können in Form von in Wasser redispergierbaren Pulver, als wässrige Redispersionen von in Wasser redispergierbaren Pulvern oder vorzugsweise in Form von wässrigen Dispersionen eingesetzt werden. Die Reihenfolge der Zugabe der einzelnen Komponenten ist beliebig.

Die Applikation der faserhaltigen pastösen Baustoffmassen kann nach den dem Fachmann geläufigen manuellen oder maschinellen Verfahren erfolgen. Die faserhaltigen pastösen Baustoffmassen eignen sich insbesondere als Armierungsmassen für Wärmedämmverbundsysteme, welche keine Fasergewebe enthalten. Zur Herstellung der Armierungsschicht werden die faserhaltigen pastösen Baustoffmassen auf die Dämmmaterialien, insbesondere Dämmplatten, aufgetragen. Übliche Dämmmaterialien sind EPS (expanded Polystyrene), XPS (= extruded Polystyrene), Polyurethan, Resolharzhartschaum, Mineralwolle, Hanf, Schilf, Holzfasern.

Weitere Anwendungen für die faserhaltigen pastösen Baustoffmassen sind deren Einsatz in Klebemitteln und Beschichtungsmitteln. Beispiele für Klebemittel sind Klebemittel für Wärmedämmplatten und Schallschutzplatten, Fliesenkleber, und Klebemittel zur Verklebung von Holz und Holzwerkstoffen. Beispiele für Beschichtungsmittel sind Mörtel, Verlaufsmassen, Estriche, Putze.

Der erfindungsgemäße Einsatz der Polymerisate d) in den faserhaltigen pastösen Baustoffmassen führt schließlich zu Produkten mit vorteilhaften anwendungstechnischen Eigenschaften, wie beispielsweise dem gewünschten Haftverbund zwischen den einzelnen Bestandteilen eines Wärmedämmverbundsystems oder verbesserten mechanischen Eigenschaften der Armierungsschichten, insbesondere einer verbesserten Schlagfestigkeit. Dies kann auf die vorteilhafte Wechselwirkung und Verträglichkeit der erfindungsgemäß eingesetzten Polymerisate mit den Fasern c) und auch den weiteren Komponenten der Baustoffmassen zurückgeführt werden. Eine weitere Folge dieser vorteilhaften Wechselwirkung und Verträglichkeit ist auch die gute Verarbeitbarkeit der faserhaltigen pastösen Baustoffmassen.

Durch die erfindungsgemäße Vorgehensweise werden sogar ohne Einsatz von Fasergeweben Wärmedämmverbundsysteme erhalten, die dieselben Eigenschaften haben, wie vergleichbare Systeme mit Fasergeweben. Durch den Verzicht auf Fasergewebe können der Aufwand zu deren Verlegung sowie Materialkosten gespart werden. Aber natürlich ist es durch zusätzlichen Einsatz von Fasergeweben auch möglich, die mechanischen Eigenschaften der Wärmedämmverbundsysteme weiter zu steigern. Darüber hinaus sind die erfindungsgemäßen faserhaltigen pastösen Baustoffmassen gebrauchsfertig und können an der Baustelle direkt verarbeitet werden, ohne dass weitere Komponenten zugegeben werden müssen. Dies ist insbesondere in Anwendungen im Malergewerbe von Vorteil, da dort das Abmischen von Baustoffmassen auf Grund des damit verbundenen Zeitaufwands von Nachteil ist. Aber alternativ können den erfindungsgemäßen faserhaltigen pastösen Baustoffmassen vor der Applikation weitere Komponenten zugemischt werden, wie beispielsweise hydraulisch abbindende Bindemittel. Hierfür sind insbesondere die oben aufgeführten Bindemittel e) geeignet, vorzugsweise in Mengen von 5 bis 30 Gew.-%, besonders bevorzugt von 10 bis 20 Gew.-%, bezogen auf die Trockenmasse der faserhaltigen pastösen Baustoffmasse. Gegebenenfalls kann zusätzliches Wasser zugegeben werden.

Die nachfolgenden Beispiele dienen zur weiteren Erläuterung der Erfindung:

In den (Vergleichs)beispielen 1 bis 10 wurden folgende Polymerdispersionen eingesetzt:

### Dispersion 1:

Emulgator stabilisierte, wässrige Dispersion eines Vinyllaurat-Ethylen-Vinylchlorid Terpolymers mit einer Glasübergangstemperatur Tg von +14°C und einem Feststoffgehalt FG von 60 Gew.-%.

### Dispersion 2:

Emulgator stabilisierte, wässrige Dispersion eines Vinylacetat-Ethylen Copolymers mit einer Glasübergangstemperatur Tg von +9°C und einem Feststoffgehalt FG von 60 Gew.-%.

### Dispersion 3 (Vergleichsdispersion):

Emulgator stabilisierte, wässrige Dispersion auf der Basis eines Acrylat-Copolymers mit einer Glasübergangstemperatur Tg von -22°C und einem Feststoffgehalt FG von 50 Gew.-%.

Zur Herstellung der pastösen Baustoffmassen der Beispiele (Bsp.) bzw. Vergleichsbeispiele (VBsp.) 1 bis 6 sowie 9 und 10 wurden die jeweiligen, in der Tabelle 1 bzw. der Tabelle 2 unter Komponente 1 aufgeführten Bestandteile in den dort angegebenen Mengen folgendermaßen gemischt:

Es wurde zuerst Wasser vorgelegt, dann wurden die flüssigen Komponenten zugegeben, anschließend die Fasern eingemischt, danach die Polymerdispersion zugesetzt und schließlich die Füllstoffe sowie die restlichen Bestandteile zugemischt.

Bei Beispiel 7 bzw. Vergleichsbeispiel 8 handelt es sich um Zweikomponentensysteme enthaltend Zement als einen weiteren Bestandteil. Die Herstellung erfolgte analog zu den vorgenannten (Vergleichs)Beispielen mit dem Unterschied, dass direkt vor der Applikation der faserhaltigen pastösen Baustoffmasse die als Komponente zwei angegebene Menge an zusätzlichem Wasser und Zement eingerührt wurde.

Bei Vergleichsbeispiel 8 handelte es sich um eine herkömmliche pastöse zweikomponentige Baustoffmasse enthaltend Zement und aber keine Fasern, wobei zusätzlich ein Glasfasergewebe eingebettet wurde.

Zur Herstellung der Armierungsschicht wurde die jeweilige Baustoffmasse auf EPS-Platten (expanded Polystyrene) aufgetragen.

Die Eigenschaften der pastösen Baustoffmassen wurden hinsichtlich Standvermögen, Geschmeidigkeit und Luftporenbildung beurteilt und mit Schulnoten (sehr gut, gut, befriedigend, mangelhaft) in Relation zu der herkömmlichen Baustoffmasse des Vergleichsbeispiels 8 beurteilt.

Zur Herstellung der Armierungsschichten wurden die pastösen Baustoffmassen der (Vergleichs)Beispiele 1 bis 10 jeweils mit einer Schichtdicke von 4 mm auf EPS-Platten (expanded Polystyrene) aufgetragen. Im Fall des Vergleichsbeispiels 8 wurde zusätzlich Glasseidengewebe in die Armierungsschicht eingelegt.

Nach Aushärtung der Armierungsschicht für 28 Tage im Normklima gemäß DIN EN 13494 wurden die Haftzugfestigkeit sowie der Ausriss auf EPS-Platten gemäß Prüfmethode DIN 18555-6 bestimmt. Der Einbeulwert auf EPS wurde gemäß Prüfmethode ISO 7892 bestimmt. Die Ergebnisse der Austestung sind in Tabelle 3 und Tabelle 4 zusammengefasst.

Die Ergebnisse zeigen, dass sich die erfindungsgemäßen faserhaltigen pastösen Baustoffmassen (Beispiel 1 bis 7 und 9) wie herkömmliche faserfreie Baustoffmassen (Vergleichsbeispiel 8) verarbeiten lassen. Es war keine Verschlechterung hinsichtlich Standvermögen, Geschmeidigkeit und Luftporenbildung feststellbar.

Die Haftung zur Wärmedämmplatte war gegenüber den herkömmlichen faserfreien Baustoffmassen verbessert (Tabelle 3 bzw. 4: Haftzugwerte bzw. EPS-Ausriss von Vergleichsbeispiel 8 sowie der Beispiele 1 bis 7 und Beispiel 9).

Überraschend war, dass die Einbeulwerte für den erfindungsgemäßen Armierungsputz zum Teil (Beispiele 1 bis 4) deutlich besser sind als der Wert für einen Glasfasergewebe-verstärkten zement-basierten Standard-Armierungsputz (Vergleichsbeispiel 8). Aus dem Vergleich des Vergleichsbeispiels 10 und den erfindungsgemäßen Beispielen geht der unerwartete Einfluss der Glasübergangstemperaturen Tg der Polymerisate auf die mechanischen Eigenschaften der Armierungsputze hervor.

**Tabelle 1:**

| Rezeptur (Angaben in Gewichts-Teilen) | Bsp.1 | Bsp.2 | Bsp.3 | Bsp.4 | Bsp.5 |
|---|---|---|---|---|---|
| **Komponente 1:** | | | | | |
| Methylhydroxyethylcellulose | 77,2 | 78,8 | 78,8 | 79,7 | 78,2 |
| Dispersion 1 | 139,0 | 141,8 | | | 140,7 |
| Dispersion 2 | | | 141,8 | 143,5 | |
| Magnesium-Schichtsilikat | 15,4 | | 15,8 | | 15,6 |
| Aluminiumhydroxid | 69,5 | 70,9 | 70,9 | 71,7 | 50,0 |
| Calciumcarbonat | | | | | |
| Kalksteinmehl (2-25µm)¹⁾ | | | | | 121,1 |
| Kalksteinmehl (20-200µm)¹⁾ | 270,4 | 275,7 | 267,8 | 271,0 | 199,3 |
| Baumwollfaser (0,5 mm)²⁾ | 3,5 | 3,5 | 5,5 | 5,6 | 3,5 |
| Dralonfaser (1mm)²⁾ | 5,4 | 5,5 | 3,5 | 3,6 | 5,5 |
| Cellulosefaser (40µm)²⁾ | 4,2 | 4,3 | 4,3 | 4,4 | 4,3 |
| Kalkstein | 355,4 | 362,3 | | | |
| Quarzsand (0,08-0,2 mm)¹⁾ | | | | | |
| Quarzsand (0,1-0,5 mm)¹⁾ | | | | | 340,8 |
| Quarzsand (0,05-0,25 mm)¹⁾ | | | 157,5 | 159,4 | |
| Quarzsand (0,2-0,6 mm)¹⁾ | | | 141,8 | 143,5 | |
| Quarzsand (0,3-0,7 mm)¹⁾ | | | 78,8 | 79,7 | |
| Konservierungsmittel | 0,8 | 0,8 | 0,8 | 0,8 | 0,8 |
| Entschäumer | 0,8 | 0,8 | 0,8 | 0,8 | 0,8 |
| Ammoniaklösung (25%ig in Wasser) | 0,4 | 0,4 | 0,4 | 0,4 | 0,4 |
| Wasser | 57,9 | 55,1 | 31,5 | 35,9 | 39,1 |
| | | | | | |

| **Komponente 2:** | | | | | |
|---|---|---|---|---|---|
| Weißzement CEM I 42,5 sw | | | | | |
| Wasser | | | | | |
| | | | | | |
| Summe (Komponenten 1 und 2): | 1000 | 1000 | 1000 | 1000 | 1000 |
| | | | | | |
| Glasseidengewebe | nein | nein | nein | nein | nein |

**Tabelle 2:**

| Rezeptur (Angaben in Gewichts-Teilen) | Bsp.6 | Bsp.7 | VBsp.8 | Bsp.9 | VBsp.10 |
|---|---|---|---|---|---|
| **Komponente 1:** | | | | | |
| Methylhydroxyethylcellulose | 77,2 | 64,1 | 1,1 | 76,1 | 78,8 |
| Dispersion 1 | | 115,3 | 125,5 | 137,0 | |
| Dispersion 2 | 139,0 | | | | |
| Dispersion 3 | | | | | 171,5 |
| Magnesium-Schichtsilikat | 15,4 | 12,8 | | 15,2 | |
| Aluminiumhydroxid | 69,5 | 57,6 | | 68,5 | 68,2 |
| Microsilica | | | | 38,0 | |
| Calciumcarbonat | | | 200,8 | | |
| Kalksteinmehl (2-25µm)¹⁾ | | | | | |
| Kalksteinmehl (20-200µm)¹⁾ | 262,6 | 217,8 | | 258,6 | 272,7 |
| Baumwollfaser (0,5 mm)²⁾ | 3,5 | 4,5 | | 5,3 | 3,5 |
| Dralonfaser (1mm)²⁾ | 5,4 | 2,9 | | 3,4 | 5,4 |
| Cellulosefaser (40µm)²⁾ | 4,2 | 3,5 | | 4,2 | 4,3 |
| Kalkstein | | | | | 362,4 |
| Quarzsand (0,08-0,2 mm)¹⁾ | 370,8 | | | | |
| Quarzsand (0,1-0,5 mm)¹⁾ | | | 376,5 | | |
| Quarzsand (0,05-0,25 mm)¹⁾ | | 128,1 | | 129,3 | |
| Quarzsand (0,2-0,6 mm)¹⁾ | | 115,3 | | 121,7 | |
| Quarzsand (0,3-0,7 mm)¹⁾ | | 64,1 | | 76,1 | |
| Konservierungsmittel | 0,8 | 0,7 | 1,3 | 0,8 | 0,8 |
| Entschäumer | 0,8 | 0,7 | 1,7 | 0,8 | 0,8 |
| Ammoniaklösung (25%ig in Wasser) | 0,4 | 0,3 | 0,4 | 0,4 | 0,4 |
| Wasser | 50,2 | 32,0 | 83,7 | 64,7 | 31,3 |
| | | | | | |

| **Komponente 2:** | | | | | |
|---|---|---|---|---|---|
| Weißzement CEM I 42,5 sw | | 123,0 | 209 | | |
| Wasser | | 57,4 | | | |
| | | | | | |
| Summe (Komponenten 1 und 2): | 1000 | 1000 | 1000 | 1000 | 1000 |
| | | | | | |
| Glasseidengewebe | nein | nein | ja | nein | nein |

**Tabelle 3: Ergebnisse der Austestung:**

| | Bsp.1 | Bsp.2 | Bsp.3 | Bsp.4 | Bsp.5 |
|---|---|---|---|---|---|
| Glasseidengewebe | nein | nein | nein | nein | nein |
| Haftzug [N/mm²] | 0,12 | 0,11 | 0,12 | 0,11 | 0,11 |
| EPS-Ausriss in % | 90 | 85 | 90 | 85 | 85 |
| Einbeulwert [J] | 5 | 5 | 5 | 5 | 3 |
| Standvermögen | gut | gut | gut | gut | gut |
| Geschmeidigkeit | gut | gut | gut | gut | gut |
| Luftporen | gut | gut | gut | gut | gut |

**Tabelle 4: Ergebnisse der Austestung:**

| | Bsp.6 | Bsp.7 | VBsp.8 | Bsp.9 | VBsp.10 |
|---|---|---|---|---|---|
| Glasseidengewebe | nein | nein | ja | nein | nein |
| Haftzug [N/mm²] | 0,12 | 0,11 | 0,10 | 0,12 | 0,07 |
| EPS-Ausriss in % | 90 | 85 | 75 | 90 | 65 |
| Einbeulwert [J] | 4 | 3 | 3 | 5 | 2 |
| Standvermögen | gut | gut | gut | gut | gut |
| Geschmeidigkeit | gut | gut | gut | gut | gut |
| Luftporen | gut | gut | gut | gut | gut |

## Patentansprüche

1. Faserhaltige pastöse Baustoffmassen enthaltend a) ein oder mehrere Füllstoffe, b) gegebenenfalls weitere Zusatzstoffe, **dadurch gekennzeichnet, dass** c) Fasern, d) ein oder mehrere Polymerisate auf Basis von einem oder mehreren ethylenisch ungesättigten Monomeren, mit einer Glasübergangstemperatur Tg von ≥ -15°C, e) ≤ 5 Gew.-% hydraulisch abbindende Bindemittel und Wasser enthalten sind, wobei sich die Angabe in Gew.-% auf das Trockengewicht der faserhaltigen pastösen Baustoffmassen bezieht, und
wobei die Polymerisate d) ausgewählt werden aus der Gruppe enthaltend Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe der Vinylester mit 1 bis 12 C-Atomen im Carbonsäurerest; Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; Mischpolymerisate mit einem oder mehreren Vinylestern, 1 bis 50 Gew.-% Ethylen und 1 bis 60 Gew.-% Vinylchlorid; wobei sich die Angaben in Gew.-% für das jeweilige Mischpolymerisat auf 100 Gew.-% aufaddieren.

2. Faserhaltige pastöse Baustoffmassen nach Anspruch 1, **dadurch gekennzeichnet, dass** als Fasern c) ein oder mehrere Fasern aus der Gruppe der organischen oder anorganischen Fasern enthalten sind.

3. Faserhaltige pastöse Baustoffmassen nach Anspruch 1 bis 2, **dadurch gekennzeichnet, dass** die Polymerisate d) Glasübergangstemperaturen Tg von -13 bis +50°C haben.

4. Faserhaltige pastöse Baustoffmassen nach Anspruch 1 bis 3, **dadurch gekennzeichnet, dass** 4 bis 26 Gew.-% Wasser enthalten sind, bezogen auf die Trockenmasse der faserhaltigen pastösen Baustoffmassen.

5. Verfahren zur Herstellung von Armierungsgewebe-freien Armierungsmassen, wobei die faserhaltigen pastösen Baustoffmassen gemäß Anspruch 1 bis 4 auf Dämmplatten aufgetragen werden.

6. Verfahren nach Anspruch 5, **dadurch gekennzeichnet, dass** die faserhaltigen pastösen Baustoffmassen gemäß Anspruch 1 bis 4 auf Dämmplatten basierend auf EPS (expanded Polystyrene), XPS (extruded Polystyrene), Polyurethan, Resolharzhartschaum, Mineralwolle, Hanf, Schilf oder Holzfasern aufgetragen werden.

7. Verfahren nach Anspruch 5 oder 6, **dadurch gekennzeichnet, dass** Wärmedämmverbundsysteme hergestellt werden, die keine Fasergewebe enthalten.

8. Verwendung der faserhaltigen pastösen Baustoffmassen gemäß Anspruch 1 bis 4 zur Herstellung von Klebemitteln oder Beschichtungsmitteln.

9. Verwendung der faserhaltigen pastösen Baustoffmassen nach Anspruch 8 zur Herstellung von Klebemitteln für Wärmedämmplatten, Schallschutzplatten, Fliesenklebern, zur Verklebung von Holz oder Holzwerkstoffen.

10. Verwendung der faserhaltigen pastösen Baustoffmassen nach Anspruch 8 zur Herstellung von Mörteln, Verlaufsmassen, Estrichen oder Putzen.

## Claims

1. Fiber-containing paste-like building compositions containing a) one or more fillers, b) optionally further additives, **characterized in that** c) fibers, d) one or more polymers based on one or more ethylenically unsaturated monomers and having a glass transition temperature Tg of ≥ -15°C, e) ≤ 5% by weight of hydraulically setting binders and water are present, where the % by weight is based on the dry weight of the fiber-containing paste-like building compositions, and the polymers d) are selected from the group consisting of copolymers of one or more vinyl esters with from 1 to 50% by weight of ethylene; copolymers of vinyl acetate with from 1 to 50% by weight of ethylene and from 1 to 50% by weight of one or more further comonomers selected from the group consisting of vinyl esters having from 1 to 12 carbon atoms in the carboxylic acid radical; copolymers comprising from 30 to 75% by weight of vinyl acetate, from 1 to 30% by weight of vinyl laurate or vinyl esters of an α-branched carboxylic acid having from 9 to 11 carbon atoms and also from 1 to 30% by weight of (meth)acrylic esters of unbranched or branched alcohols having from 1 to 15 carbon atoms, which additionally contain from 1 to 40% by weight of ethylene; copolymers comprising one or more vinyl esters, from 1 to 50% by weight of ethylene and from 1 to 60% by weight of vinyl chloride; where the figures in % by weight for the respective copolymer add up to 100% by weight.

2. Fiber-containing paste-like building compositions according to Claim 1, **characterized in that** one or more fibers selected from the group consisting of organic and inorganic fibers are present as fibers c).

3. Fiber-containing paste-like building compositions according to Claim 1 or 2, **characterized in that** the polymers d) have glass transition temperatures Tg of from -13 to +50°C.

4. Fiber-containing paste-like building compositions according to any of Claims 1 to 3, **characterized in that** from 4 to 26% by weight of water, based on the dry mass of the fiber-containing paste-like building compositions, are present.

5. Process for producing reinforcing compositions which are free of woven reinforcing fabrics, wherein the fiber-containing paste-like building compositions according to any of Claims 1 to 4 are applied to insulation boards.

6. Process according to Claim 5, **characterized in that** the fiber-containing paste-like building compositions according to any of Claims 1 to 4 are applied to insulation boards based on EPS (expanded polystyrene), XPS (extruded polystyrene), polyurethane, rigid resol resin foam, mineral wool, hemp, reed or wood fibers.

7. Process according to Claim 5 or 6, **characterized in that** composite thermal insulation systems which do not contain any woven fiber fabrics are produced.

8. Use of the fiber-containing paste-like building compositions according to any of Claims 1 to 4 for producing adhesives or coating compositions.

9. Use of the fiber-containing paste-like building compositions according to Claim 8 for producing adhesives for thermal insulation boards, acoustic insulation boards, tile adhesives, for adhesively bonding wood or wood materials.

10. Use of the fiber-containing paste-like building compositions according to Claim 8 for producing mortars, self-leveling compositions, screeds or renders.

## Revendications

1. Matières pâteuses pour matériaux de construction contenant des fibres, qui contiennent a) une ou plusieurs charges, b) éventuellement d'autres additifs, **caractérisées en ce que** sont contenus c) des fibres, d) un ou plusieurs polymérisats à base d'un ou plusieurs monomères à insaturation éthylénique, ayant une température de transition vitreuse Tg de ≥ -15 °C, e) ≤ 5 % en poids de liants à prise hydraulique et de l'eau, la donnée en % en poids se rapportant au poids sec des matières pâteuses pour matériaux de construction contenant des fibres, et
les polymérisats d) étant choisis dans le groupe contenant des copolymérisats d'un ou plusieurs esters vinyliques avec 1 à 50 % en poids d'éthylène ; des copolymérisats d'acétate de vinyle avec 1 à 50 % en poids d'éthylène et 1 à 50 % en poids d'un ou plusieurs autres comonomères choisis dans le groupe des esters vinyliques ayant de 1 à 12 atomes de carbone dans le fragment acide carboxylique ; des copolymérisats avec 30 à 75 % en poids d'acétate de vinyle, 1 à 30 % en poids de laurate de vinyle ou d'ester vinylique d'un acide carboxylique alpha-ramifié ayant de 9 à 11 atomes de carbone, ainsi que 1 à 30 % en poids de (méth)acrylates d'alcools ramifiés ou non ramifiés ayant de 1 à 15 atomes de carbone, qui contiennent encore 1 à 40 % en poids d'éthylène ; des copolymérisats avec un ou plusieurs esters vinyliques, 1 à 50 % en poids d'éthylène et 1 à 60 % en poids de chlorure de vinyle ; la somme des données en % en poids pour le copolymérisat respectif étant égale à 100 % en poids.

2. Matières pâteuses pour matériaux de construction contenant des fibres selon la revendication 1, **caractérisées en ce que** sont contenues en tant que fibres c) une ou plusieurs fibres choisie(s) dans le groupe des fibres organiques ou inorganiques.

3. Matières pâteuses pour matériaux de construction contenant des fibres selon la revendication 1 ou 2, **caractérisées en ce que** les polymérisats d) ont des températures de transition vitreuse Tg de -13 à +50 °C.

4. Matières pâteuses pour matériaux de construction contenant des fibres selon les revendications 1 à 3, **caractérisées en ce que** sont contenus 4 à 26 % en poids d'eau, par rapport à la matière sèche des matières pâteuses pour matériaux de construction contenant des fibres.

5. Procédé pour la production de matières de renfort sans tissu de renfort, dans lequel on applique les matières pâteuses pour matériaux de construction contenant des fibres selon les revendications 1 à 4 sur des panneaux isolants.

6. Procédé selon la revendication 5, **caractérisé en ce qu'**on applique les matières pâteuses pour matériaux de construction contenant des fibres selon les revendications 1 à 4 sur des panneaux isolants à base d'EPS (expanded polystyrene, polystyrène expansé), de XPS (extruded polystyrene, polystyrène extrudé), polyuréthane, mousse rigide de résine résolique, laine de roche, chanvre, roseau ou fibres de bois.

7. Procédé selon la revendication 5 ou 6, **caractérisé en ce qu'**on produit des systèmes composites thermo-isolants qui ne contiennent pas de tissu de fibres.

8. Utilisation des matières pâteuses pour matériaux de construction contenant des fibres selon les revendications 1 à 4, pour la fabrication d'adhésifs ou de produits de revêtement.

9. Utilisation des matières pâteuses pour matériaux de construction contenant des fibres selon la revendication 8, pour la fabrication d'adhésifs pour panneaux thermo-isolants, panneaux insonorisants, colles pour carreaux, pour le collage du bois ou de matériaux à base de bois.

10. Utilisation des matières pâteuses pour matériaux de construction contenant des fibres selon la revendication 8, pour la production de mortiers, matières de nivellement, chapes ou crépis.
